# EUROPEAN PATENT SPECIFICATION

(11) **EP 4 202 748 B1**
(45) Date of publication and mention of the grant of the patent: **15.04.2026**
(21) Application number: 22202673.4
(22) Date of filing: 20.10.2022
(51) Int. Cl.: G06F 21/79, G06F 21/62, G06F 12/14, H04L 9/00, H04L 9/06

(54) **DATA OBLIVIOUS CRYPTOGRAPHIC COMPUTING**
DATENBEWUSSTE KRYPTOGRAPHISCHE BERECHNUNG
CALCUL CRYPTOGRAPHIQUE INCONSCIENT DE DONNÉES

(30) Priority: 22.12.2021 US 202117559385
(43) Date of publication of application: 28.06.2023
(73) Proprietor: Intel Corporation, Santa Clara, CA 95054 (US)
(72) Inventor: BIERNACKI, Lauren, Santa Clara, CA 95054 (US); LEMAY, Michael, Hillsboro, OR 97123 (US)
(74) Representative: Viering, Jentschura & Partner mbB Patent- und Rechtsanwälte

(56) References cited:
- US-A1- 2011 153 689
- US-A1- 2020 050 779
- US-A1- 2020 067 897
- US-A1- 2020 159 676

## Description

### BACKGROUND

Subject matter described herein relates generally to the field of computer security and more particularly to data oblivious cryptographic computing (DOCC).

Existing techniques for protecting sensitive data from being leaked via buggy or malicious code through overt or covert channels and for hardening that data against side channels using constant-time programming depend on difficult or slow programming techniques. For example, fully homomorphic encryption (FHE) imposes a five orders of magnitude slowdown and massive memory consumption. Data oblivious (DO) computation is an alternative method with much lower computational and memory overheads, but it has traditionally relied on compiler correctness for its security, and on complex code analysis to confirm that data oblivious computation is being enforced. Also, data oblivious computation is unable to defend against untrusted code, e.g., an untrusted library linked into a program processing sensitive data. Accordingly, systems and methods to enable dynamic enforcement of data oblivious computation without requiring the entire program to be trusted, and without relying on time-consuming, error-prone code inspection may find utility.
Document US 2020/159676 A1 discloses technologies providing cryptographic computing with cryptographically encoded pointers in multi-tenant environments. An example method comprises executing, by a trusted runtime, first instructions to generate a first address key for a private memory region in the memory and generate a first cryptographically encoded pointer to the private memory region in the memory, wherein generating the first cryptographically encoded pointer includes storing first context information associated with the private memory region in first bits of the first cryptographically encoded pointer, and performing a cryptographic algorithm on a slice of a first linear address of the private memory region based, at least in part, on the first address key and a first tweak, the first tweak including the first context information. Thus, the pointer is encoded and used to derive at least a portion of tweak input for data encryption/decryption and the decrypted data is based on a secret key and data tweak derived at least in part from the cryptographically encoded pointer. The method further includes permitting a first tenant in the multi-tenant environment to access the first address key and the first cryptographically encoded pointer to the private memory region.

### BRIEF DESCRIPTION OF THE DRAWINGS

The detailed description is described with reference to the accompanying figures.
Fig. 1 is a schematic, block diagram illustration of components of an apparatus to implement data oblivious cryptographic computing in accordance with some examples.
Fig. 2 is a schematic illustration of memory allocation in an implementation of data oblivious cryptographic computing in accordance with some examples.
Fig. 3 is a schematic illustration of pointer access in an implementation of data oblivious cryptographic computing in accordance with some examples.
Fig. 4 is a schematic illustration of an encryption scheme in an implementation of data oblivious cryptographic computing in accordance with some examples.
Fig. 5A is a flowchart illustrating operations in a method to implement data oblivious cryptographic computing in accordance with some examples.
Fig. 5B is a flowchart illustrating operations in a method to implement data oblivious cryptographic computing in accordance with some examples.
Fig. 6 is a flowchart illustrating operations in a method to implement data oblivious cryptographic computing in accordance with some examples.
Fig. 7A is a schematic illustration of computer code in an implementation of data oblivious cryptographic computing in accordance with some examples.
Fig. 7B is a schematic illustration of computer code in an implementation of data oblivious cryptographic computing in accordance with some examples
Fig. 8 is a schematic illustration of a computing architecture which may be adapted to implement data oblivious cryptographic computing in accordance with some examples.

### DETAILED DESCRIPTION

The present invention is defined in the independent claims. Preferred embodiments are defined in the dependent claims. Described herein are exemplary systems and methods to implement data oblivious cryptographic computing. In the following description, numerous specific details are set forth to provide a thorough understanding of various examples. However, it will be understood by those skilled in the art that the various examples may be practiced without the specific details. In other instances, well-known methods, procedures, components, and circuits have not been illustrated or described in detail so as not to obscure the examples.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

As described briefly above, data oblivious (DO) computation has lower computational and memory overheads than other cryptographic computing techniques, but it has traditionally relied on compiler correctness for its security, and on complex code analysis to confirm that data oblivious computation is being enforced. Also, data oblivious computation is unable to defend against untrusted code, e.g., an untrusted library linked into a program processing sensitive data. To address these and other issues, systems and methods for data oblivious cryptographic computing are described herein. In some examples described herein, data oblivious cryptographic computing techniques identify and encrypt sensitive data requiring data oblivious processing separately from other, non-sensitive, data in the program. Registers containing sensitive data may be tagged and encrypted to prevent the sensitive data from being leaked by being processed in a non-data oblivious manner due to buggy or malicious code. Further, register contents across function call boundaries may be protected by tweaking register encryption uniquely for each function invocation.

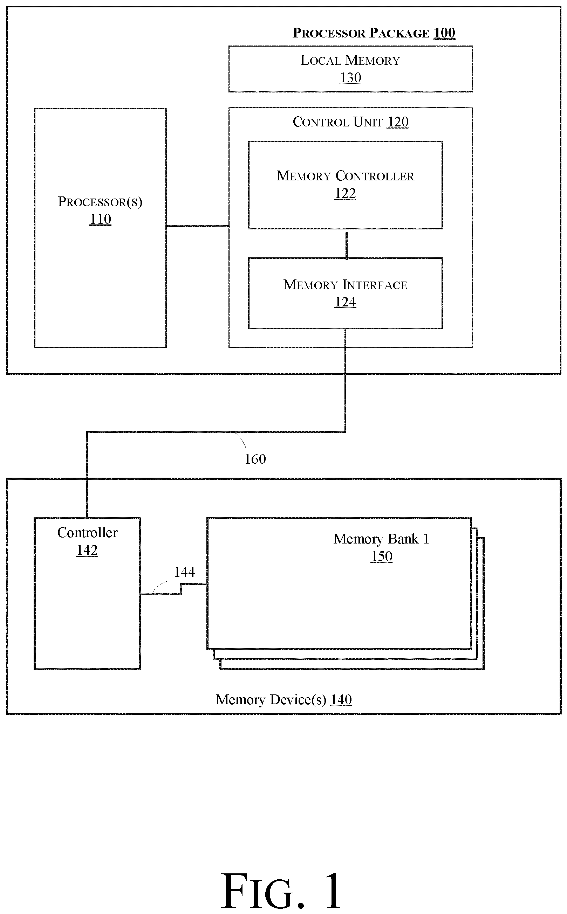

Data oblivious cryptographic computing techniques described herein prevent, or at least inhibit, untrusted or vulnerable program slices from disclosing the contents of sensitive heap allocations. More particularly, data oblivious cryptographic computing techniques described herein keep the contents of sensitive heap allocations encrypted in memory and in the register file, track the locations of these sensitive values, and enforce that these values are processed in a data-oblivious manner. Further structural and methodological details relating to data oblivious cryptographic computing are described below with reference to Fig. 1 through Fig. 8, below.

Fig. 1 is a schematic, block diagram illustration of components of an apparatus to implement data oblivious cryptographic computing in accordance with some examples. Referring to Fig. 1, in some examples a processor package 100 may comprise one or more processors 110 coupled to a control unit 120 and a local memory 130. Control unit 120 comprises a memory controller 122 and a memory interface 124.

Memory interface 124 is coupled to one or more remote memory devices 140 by a communication bus 160. Memory device 140 may comprise a controller 142 and one or more memory banks 150. In various examples, at least some of the memory banks 150 may be implemented using nonvolatile memory, e.g., phase change memory, ferroelectric random-access memory (FeTRAM), nanowire-based non-volatile memory, memory that incorporates memristor technology, a static random access memory (SRAM), three dimensional (3D) cross point memory such as phase change memory (PCM), spin-transfer torque memory (STT-RAM) or NAND memory. In some examples the memory device(s) 140 may comprise one or more nonvolatile direct in-line memory modules (NVDIMMs) coupled to a memory channel 144 which provides a communication link to controller 142. The specific configuration of the memory bank(s) 150 in the memory device(s) 140 is not critical.

To enable data oblivious cryptographic computing protections, sensitive data in memory should be distinguished from non-sensitive data in memory. This distinction is useful because data oblivious programming restrictions required to prevent data disclosures via side channels can place a heavy burden on the source program. To reduce this burden, data oblivious cryptographic computing sensitive data may be defined at a heap-allocation granularity. Data oblivious execution is required only for computation involving these sensitive heap allocations. Other (i.e., non-sensitive) data does not need to adhere to data oblivious programming restrictions. In some examples cryptographic computing (CC) techniques may be leveraged to identify and protect these sensitive heap allocations.

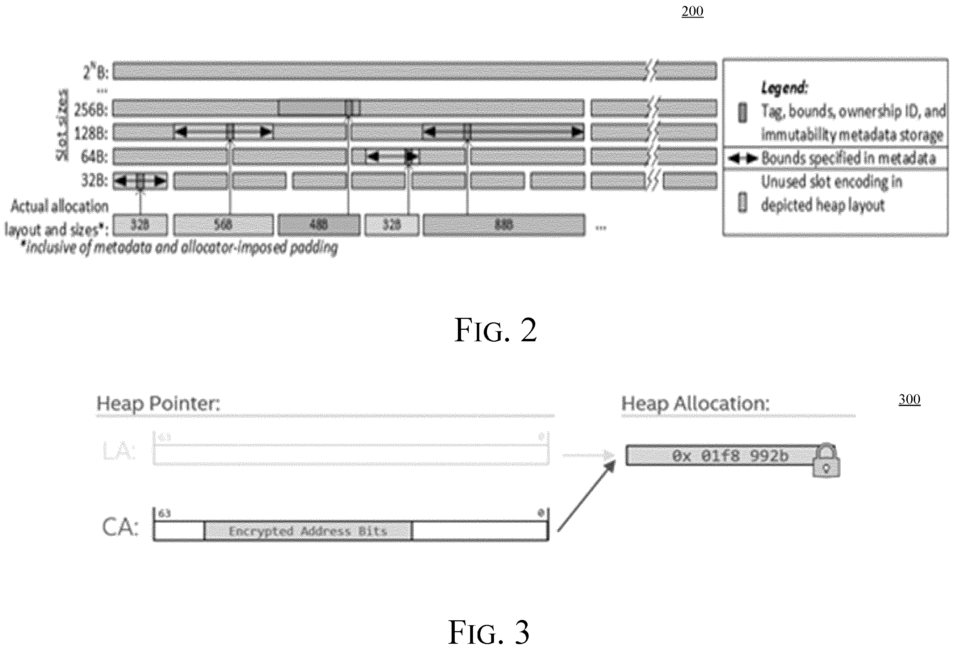

Fig. 2 is a schematic illustration of memory allocation 200 in an implementation of data oblivious cryptographic computing in accordance with some examples. Referring to Fig. 2, cryptographic computing provides object-based data encryption and mitigates spatial and temporal safety vulnerabilities for sensitive heap allocations. More particularly, cryptographic computing assigns each object to a power-of-two-aligned slot that best fits the memory space requirements of the object, binds the encryption of that object to its unique slot, and stores metadata inline with object allocations. In some examples described herein, metadata stored with object allocations may be extended to store ownership identifiers (IDs) associated with the data. Allocations are not necessarily assigned to the next larger slot size than the allocation size, since they may cross power-of-two alignment boundaries for some of the next possible slot sizes. Each allocation may be assigned a slot size that entirely fits the allocation at its particular location without crossing any slot boundaries at that assigned size. Smaller slots than illustrated here could also be supported similarly.

Fig. 3 is a schematic illustration of pointer access 300 in an implementation of data oblivious cryptographic computing in accordance with some examples. Referring to Fig. 3, cryptographic computing replaces the linear address (LA) used to access a heap allocation by a cryptographic address (CA). In some embodiments the cryptographic address is an encoded 64-bit pointer that is partially encrypted to mitigate pointer forgery. The lower bits of the cryptographic address are unencrypted to allow programs to freely index within the heap allocation without needed to first decrypt the pointer. This uniquely encrypted cryptographic address is used as a tweak to encrypt the data within the heap allocation (alongside a data encryption key). This design achieves unique, per-object based data encryption for heap memory.

Data encryption for the corresponding heap allocation is bound to the encrypted pointer. Thus, any misuse of a pointer to reference a different object will result in incorrect encryption or decryption of that other object. This property directly mitigates spatial safety vulnerabilities, and it can also mitigate use after free UAF. If a slot is reused while some dangling pointer still references that exact slot, then UAF may still occur, but the allocator can seek to maximize the interval between reuse of a particular slot.

In some examples temporarily quarantining a slot in memory does not imply quarantining the underlying physical memory, which may still be used by assigning it to a different slot. This property provides unique per-object encryption for sensitive heap allocations. Because the encryption for each heap allocation is tweaked by its unique cryptographic address, sensitive values are encrypted differently across different heap allocations in memory. This approach may adequately diversify heap memory, thereby obviating the need for cryptographic salts in the data encryption scheme.

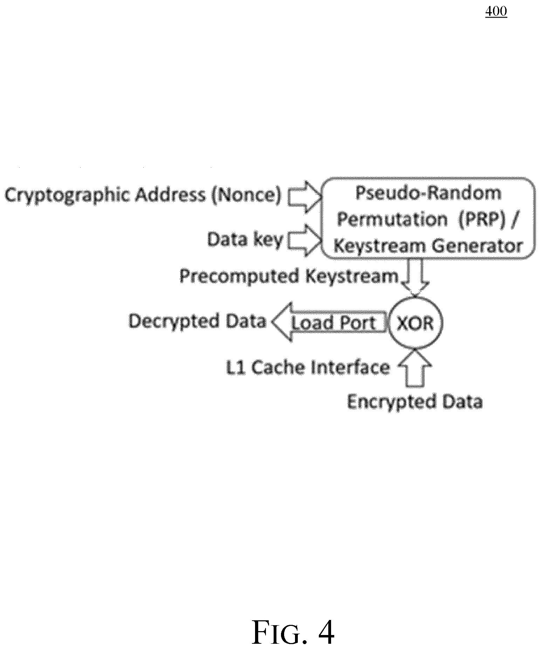

Fig. 4 is a schematic illustration of an encryption scheme 400 in an implementation of data oblivious cryptographic computing in accordance with some examples. Referring to Fig. 4, In some examples the cryptographic computing data encryption scheme uses the cryptographic address as a nonce or "tweak", alongside a data key to generate a precomputed keystream. This keystream is then XOR'd with data in the load pipeline when read from an L1 cache interface. Alternative embodiments may use a block cipher to encrypt the data.

Data oblivious cryptographic computing extends cryptographic computing by specifying two types of heap allocations: (1) sensitive allocations and (2) non-sensitive allocations. Sensitive allocations are identified architecturally via tag information stored in the cryptographic address used to reference a particular allocation. Alternatively, sensitive allocations can be identified by using in-line metadata stored within the heap allocation. Alternatively, sensitive allocations can be identified by a bit in a capability, which may be protected from forgery using a tag bit associated with each word of memory. More particularly, sensitive allocations are encrypted under a separate data encryption key than used for non-sensitive allocations, thereby providing cryptographic isolation between sensitive data and non-sensitive data. In some examples the pointer encryption scheme (i.e., the partially encrypted cryptographic address) is adopted from cryptographic computing. Pointers to sensitive and non-sensitive heap allocations are encoded in the same manner and encrypted with the same pointer encryption key.

### Encrypting Sensitive Heap Allocations in the Register File

In conventional cryptographic computing, sensitive heap allocations are protected in memory. However, when loaded into the register file, these values are unencrypted, leaving them vulnerable to snooping and/or disclosure. In data oblivious cryptographic computing, encryption is extended into the register file. To support register encryption, the architecture is extended to include: (1) 1-bit register tags to identify whether the register contents are sensitive and encrypted, and (2) cipher engines that wrap functional units in the execute stage to decrypt source operands and encrypt the result. The registers register base pointer (RBP), register stack pointer (RSP), (register instruction pointer) RIP, and status register (RFLAGS) are never encrypted.

When sensitive data is loaded from a sensitive heap allocation, the bytes are re-encrypted under the register encryption scheme and stored to the destination register. The register tag for the destination register is set, indicating that that value is sensitive and encrypted

When sensitive data in a register is operated on, it is first decrypted by the cipher engine in the pipeline's execute state. The register tag value determines whether source registers require decryption. On commit, the result is re-encrypted and stored back to the destination register. The destination register's tag bit is set, indicating that the result is sensitive. If the instruction updates RFLAGS, an additional tag bit is set indicating that the content of RFLAGS is sensitive. This tag is used to enforce data oblivious execution at runtime,

When sensitive data is stored to a sensitive heap allocation, it is re-encrypted under the data encryption scheme, described above. When sensitive data is spilled to stack memory, it is spilled in its encrypted form. The architecture may be extended to track spilled sensitive values by storing inline metadata on the stack. When register values are filled, the encrypted value is placed in the register file and the register tag bit is set according to the inline metadata. There are other alternatives for tracking sensitive data on the stack. Such information could be recorded by a shadow stack. Alternatively, sensitive registers could be spilled to memory via new PUSH/POP instructions designated for sensitive values that restore the sensitive tag bit correctly. This implementation may require static analysis in the compiler to identify when sensitive data is written to and read from the stack. Other stack values such as local allocations could also be treated as sensitive data and tracked while in memory similarly to spilled, sensitive register values.

The register encryption scheme can be designed to fit the desired performance-security tradeoffs of the system. Various options for encryption ciphers and tweaks for register encryption are discussed below. In some examples the frame pointer (RBP) and logical register ID may be used as a cryptographic nonce to provide cryptographic isolation across call boundaries and across different registers. This diffusion prevents untrusted functions from predictably reading, operating on, or permuting callee-saved registers. Any of these operations will result in incorrect encryption or decryption of the callee-saved registers.

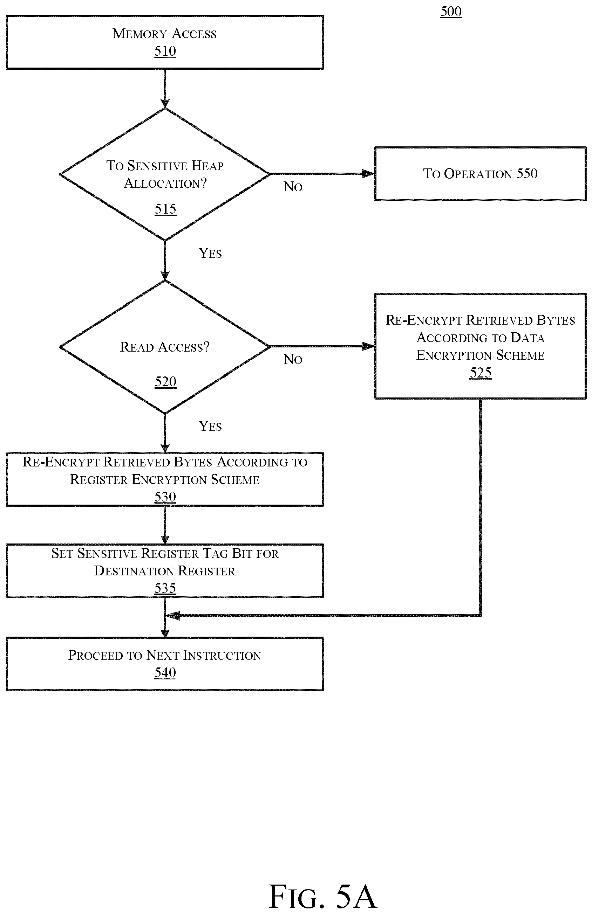

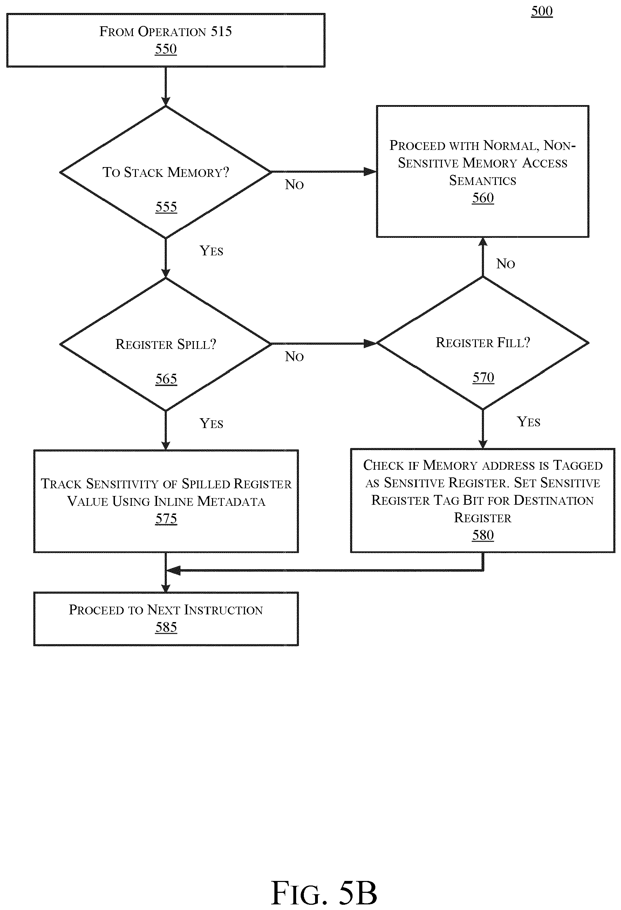

Operations to implement data oblivious cryptographic computing in accordance with some examples are described with reference to Fig. 5A and Fig. 5B. In some examples, the operations depicted in Fig. 5A and Fig. 5B may be implemented by the one or more of the memory controller 122 and/or the memory controller 142 and/or cryptographic logic within processor(s) 110. The operations may be implemented as logic instructions to be executed by a processor, i.e., software or firmware, or by a programmable device such as a field programmable gate array (FPGA), or may be reduced to dedicated hardware circuitry.

Referring first to Fig. 5A, at operation 510 a memory access request is received. If, at operation 515, the memory access request is not directed to a portion of the heap memory that is designated sensitive, as described above, then operation 550, described in Fig. 5B below, is implemented. By contrast, if at operation 515 the memory access request is directed to a portion of the heap memory that is designated sensitive, as described above, then operation 520 is implemented.

If, at operation 520, the memory access is not a read access, implying it is a write access, then operation 525 is implemented and the data from register(s) is re-encrypted according to a data encryption scheme, as described above, prior to the data being written to memory and then operation 540 is implemented to proceed to the next instruction. By contrast, if at operation 520 the memory access is a read access, then operation 530 is implemented and the data retrieved from the read access is re-encrypted according to a register encryption scheme, as described above. At operation 535 the register tag bit for the destination register for the data is set to a value that indicates that the data is sensitive, and then operation 540 is implemented to proceed to the next instruction. If sensitive data read from memory is immediately consumed by an execution unit or stored temporarily in non-architectural register(s) rather than being placed in architectural register(s), then the step to re-encrypt data for storage in register(s) may be skipped.

Referring to Fig. 5B, at operation 550 the process flow from operation 515 is initiated. If, at operation 555 the memory access operation is not directed to stack memory then operation 560 is implemented and the operations continue with normal, non-sensitive memory access semantics. By contrast, if at operation 555 the memory access operation is directed to stack memory then operation 565 is performed.

If at operation 565, the memory access operation does not cause a register spill then operation 570 is implemented. If, at operation 570, the memory access operation does not cause the target register to be full then operation 560 is implemented and operations continue with normal, non-sensitive memory access semantics. By contrast, if at operation 570 the memory access operation causes the register to be full then operation 580 is implemented. In operation 580, a check is performed to determine if the source memory address is tagged as a sensitive memory address, and if so the sensitive tag is set for the destination register, then operation 585 is implemented to proceed to the next instruction.

Referring back to operation 565, if the memory access operation causes a register spill then operation 575 is implemented and the sensitivity of the spilled register value is tracked using the inline metadata associated with the register, then operation 585 is implemented to proceed to the next instruction,

### Register Encryption Scheme: PRINCE Block Cipher

Counter-mode (XOR) encryption is not ideal for register encryption, as untrusted software can still reliably manipulate bits in encrypted registers. However, there are many suitable, 64-bit block ciphers that present good options for register encryption. Notably, the PRINCE block cipher uses a 64-bit input/output and a 128-bit key. While the PRINCE Block Cipher is not tweakable directly, information can be embedded within the encryption key to function as a tweak.

### Register Encryption Tweak: Frame Pointer (RBP) as Register Encryption Tweak

To enforce isolation of sensitive registers across call boundaries, the current frame pointer can be used as a tweak in the register encryption scheme. When sensitive data is loaded into the register file from a sensitive heap allocation, it is re-encrypted under the register encryption scheme using the current routine's frame pointer. On a function call, the argument registers (e.g., RBX, R12, R13, R14, and R15) are rekeyed under the subroutine's frame pointer. On a return, the return registers (e.g., RAX, RDX) are rekeyed under the caller's frame pointer. This rekeying maintains correct program execution while isolating other register values (e.g., callee-saved and caller-saved registers) from untrusted subroutines.

### Register Encryption Tweak: Logical Register

To enforce isolation of sensitive registers across different register locations, the logical register ID can be used as a tweak in the register encryption scheme. This prevents untrusted subroutines from swapping values stored in callee-saved registers. This also obfuscates whether two registers hold the same sensitive plaintext value. Without this tweak, an untrusted subroutine could still infer whether two callee saved registers hold the same plaintext, since the ciphertext values within the register file would be identical. Use of the logical register ID acts as cryptographic salt to diversify ciphertext values.

On register spills, the register encryption scheme may be modified to exclude the logical register ID. This is because if the register is spilled from one logical register and filled into a different logical register, the resultant decryption will produce a garbled value. Thus, when spilled to memory, the source register is re-encrypted so that the logical register ID tweak is removed. On a fill, the value read from memory is decrypted and then re-encrypted using the destination register's logical ID.

### Register Encryption Tweak: Cryptographic Address or Linear Address Bits

A portion of the allocation's cryptographic or linear address can also be used as a tweak for register encryption. The purpose of this tweak is to diffuse sensitive values across loop iterations. For example, consider a loop that is iteratively processing the contents of a sensitive string. If two loop iterations are processing the same character 'A,' loaded into the same register, the ciphertexts would be identical. An untrusted subroutine would be able to infer that the two loop iterations are processing the same character value, and therefore be able to infer something about the contents of the sensitive string. To prevent this, a portion of the address bits could be used as a cryptographic nonce. This requires that the register file be extended to store these address bits so that the register contents can be decrypted correctly. For this reason, a subset or compressed or hashed version of the address bits may be used to reduce this storage overhead.

Register encryption can also be used to protect non-sensitive data within the register file. This register encryption scheme can similarly be applied to non-sensitive data. Cryptographic isolation between sensitive and non-sensitive data can be enforced using different register encryption keys or different cryptographic tweaks or initialization vectors (IVs).

Register encryption keys can be switched when switching compartments or even for each function call. This can be an alternative to binding register encryption to stack frame base addresses. Register keys can be stored inline on the stack or on a shadow stack and protected using stack encryption or other protections, e.g., making a shadow stack unreadable. Argument registers can be encrypted and decrypted using the key for the caller.

The compiler can zero out any argument registers that are not actually set to arguments to avoid disclosing secrets to a callee. The argument registers are caller-saved, so there is no need for the callee to save and restore them.

Each word of memory could be tagged to indicate whether that word contains a spilled, encrypted register value, and that could be propagate through any instructions used for register spills and fills (e.g., PUSH/POP/MOV).

Alternatively, to avoid the need to tag memory words, new register spill and fill instructions could be defined that store registers in their encrypted format to memory preceded by a byte specifying the sensitive tag bit for the register. The sensitive tag bit may be left unencrypted, since forging it to indicate non-sensitive will simply result in incorrect decryption of the restored register value.

The compiler can use the new register spill and fill instructions and reserve adequate stack frame storage for the sensitive tag bit values.

In other examples the stack layout may be changed to emit fill instructions that unconditionally set the register tag bit to a value specified by an encoding of the instruction(s) or an instruction operand based on static analysis of the flows of sensitive data.

### Enforcing Data Oblivious Programming Architecturally

Data oblivious execution is a technique to address microarchitectural side channels by preventing sensitive data from propagating to shared resources. Namely, data oblivious execution prohibits applications from using sensitive values for memory addressing or control flow. While programs have employed data oblivious techniques to address side channels, data oblivious programming is not always upheld by the underlying microarchitecture. DO-CC aims to enforce data oblivious execution for sensitive allocations architecturally.

Before the instruction is dispatched, the tags of the source registers are checked. If a source register is sensitive and being used for a non-data-oblivious instruction, execution is halted and an exception is raised. Otherwise, the instruction is dispatched. Sensitive source registers are decrypted between instruction dispatch and execute, as described below.

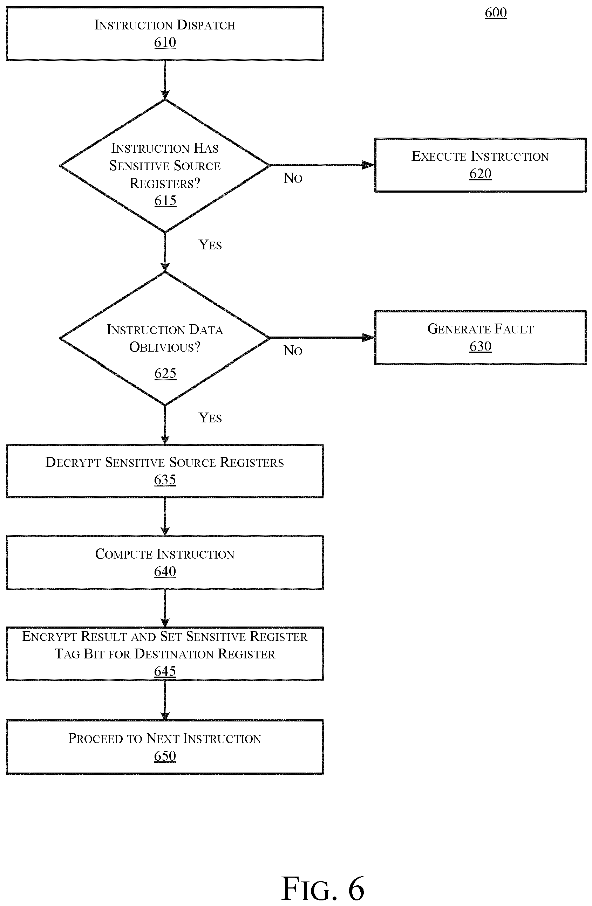

Operations to enforce data oblivious cryptographic computing in accordance with some examples are described with reference to Fig. 6. Referring to Fig. 6, at operation 610 an instruction is dispatched, If, at operation 615, the instruction does not utilize sensitive source registers, then operation 620 is implemented and the instruction may execute normally. By contrast, if at operation 615 the instruction utilizes sensitive source registers then operation 625 is implemented.

If, at operation 625 the instruction is not data oblivious, then operation 630 is implemented and a fault is generated. In some examples, the program may be terminated and the developer may be notified that the program performed an illegal operation. By contrast, if at operation 625 the instruction is data oblivious then operation 635 is implemented and the sensitive source register(s) used for the instruction are decrypted. At operation 640 the instruction is computed, and at operation 645 the results of the operation are encrypted and the sensitive register tag bit for the destination register is set to a value that indicates that the result is encrypted, then operation 650 is implemented and to proceed to the next instruction.

In some examples the underlying architecture may specify which instructions are data oblivious and safe to execute on sensitive plaintexts. In some examples many arithmetic, Boolean, and relational instructions are implemented in a data-oblivious manner in the underlying microarchitecture, although some instructions in these categories, e.g., such as for division, may have varying execution time based on the input data. Conditional branches and instructions that use sensitive registers for memory addressing are not data oblivious and therefore will trigger faults. To support conditional logic, the architecture supports data oblivious conditional move instructions (e.g., CMOV) that enable predication. Sensitive-register-based memory addressing may be permitted with support from Oblivious RAM (ORAM). Alternatively, since cryptographic computing bounds allocations, at least approximately, sensitive-register-based indexing could load the entire heap allocation to sufficiently obfuscate the value of the sensitive index. Some embodiments may disallow the use of data with values known to untrusted software in data oblivious computations, e.g., immediate operands or non-sensitive register values. This may help to limit the information that an adversary may extract about sensitive data by preventing an adversary from combining unknown sensitive data with known values and inspecting the generated ciphertext outputs to detect changes or a lack of changes that may reveal information about the sensitive plaintext data. Some embodiments may disallow the use of implicit known data, e.g., the +1/-1 implicit operands in the X86 INC/DEC instructions, in data oblivious computations.

With register encryption and data oblivious enforcement, only data oblivious functional units receive plaintext access to sensitive values, which reduces the trusted computing base (TCB).

### Reducing Data Oblivious Programming Constraints on Programmers

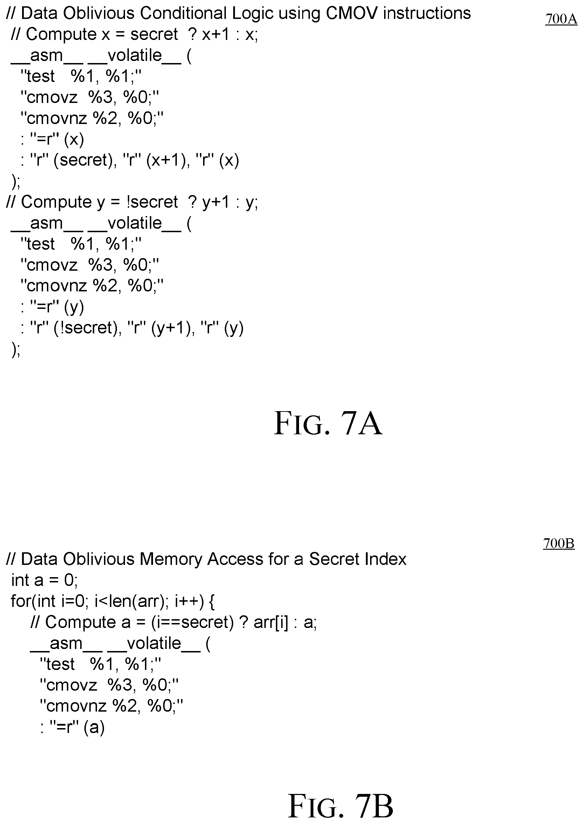

Data oblivious programming has two main tenets: sensitive data cannot influence control flow, and sensitive data cannot influence memory accesses. According to these tenets, using sensitive values for branch conditions or to calculate memory addresses or index structures is prohibited. Such logic is feasible to write in a data oblivious manner, however. For example, branch conditions can be safely replaced using predication in the form of conditional move (CMOV) operators, shown in Fig 7A. This predication can be used to implement sensitive memory indexing safely. Figure 7B shows code that safely indexes into the array (arr) and returns the desired sensitive index. This code is data oblivious because all memory locations are accessed regardless of the value of secret.

Architectures that supply at least approximate bounds information, like cryptographic computing, can reduce the burdens associated with code transformations to deal with data oblivious cryptographic computing code transformations. Specifically, such architectures can assist in computing sensitive memory indexes. In cryptographic computing, the approximate size of the sensitive heap allocation is known by the architecture, in the form of the power-of-two slot encoded into the pointer. Thus, when a sensitive index is being used to access a sensitive heap allocation, the architecture could automatically load each block in the sensitive allocation and return only the requested index. This emulates the code in Fig. 7B without requiring changes to the source code. This technique efficiently emulates ORAM within the sensitive heap allocation, as it obscures any memory access within the bounds of the allocation. Some portions of the power-of-two slot may fall outside of the actual allocation being accessed, but that data is ignored.

Some portions of the allocated slot may be inaccessible, e.g., due to the underlying page not being mapped or not having the requisite permissions. In some examples, the mapped page may not include any part of the allocation, so it can be skipped without revealing any information about what portion of the allocation was requested by the software. In other examples the inaccessible page is part of the allocation, but it is inaccessible due to it currently being paged out. In that case, it is important for the mapped page to be swapped back to allow accesses to be performed regardless of whether the requested portion of the allocation falls within that previously inaccessible page. This is important for obscuring, e.g., from an adversary, whether the requested memory is in that page. The distinction between these types of pages may be encoded in one or more page table entries. For example, a "noalloc" page table entry bit may, when set, indicate that the page is not part of an allocation, so no accesses to it are permitted, and it can be skipped by data oblivious accesses. All other bits in a page table entry with the noalloc bit set are ignored, except for the present bit.

In some examples this may be suitable for making read operations data oblivious in some threat models, since the updated data produced by writes may still be visible if the adversary has access to inspect data values.

Some threat models may permit variations of this architecture. For example, if an adversary has visibility only into memory requests at cacheline granularity, then it is not necessary to access every byte within every cacheline of an allocation to obscure access patterns. Accessing at least one byte in each cacheline of the allocation is sufficient.

Architectures with other sources of more precise bounds information, e.g. Linear Inline Metadata (LIM), and CHERI may reduce the number of memory accesses useful for ORAM emulation purposes compared to the strict powers-of-two required for cryptographic computing.

Other ORAM algorithms that generate accesses in other patterns besides a direct linear scan may also be used to implement ORAM emulation. They may reduce the total number of needed accesses while still obscuring access patterns.

### Extending Data Oblivious Cryptographic Computing for Local Services

The data oblivious cryptographic computing model can be extended to consider local compute. Rather than shipping data to a server for data oblivious computation, it could instead be provided to a local library. Data oblivious cryptographic computing encapsulates this computation so that the library can only process data in a data-oblivious manner. The originating compartment may generate a wrapped key handle for encrypting sensitive data. The use of this key can then be delegated to the untrusted library for the purpose of decrypting data into registers that are marked as sensitive. Once in the registers, the register encryption and controls on how the register data can be decrypted and processed ensures that these sensitive values are not used as unsafe operands. This approach eliminates, or at least reduces, the remote procedure call (RPC) overheads of the client-server model.

To enforce data-oblivious execution in untrusted libraries, the instruction set architecture can be extended to generate capabilities for keys such that some capabilities grant declassification privileges so the originating compartment can access sensitive plaintext (i.e., decrypt data into a register without marking it as sensitive) whereas other capabilities grant only data oblivious computation privileges.

In some examples a local-compute usage model is similar to that of cryptographic computing with multi-tenancy support. Sensitive computation may be offloaded to a local library and/or secondary compartment, which may be encapsulated so that the data can be processed only in a data-oblivious manner. While the originating compartment has direct access to the sensitive data (i.e., can analyze the data directly and perform data-dependent operations), the secondary compartment cannot analyze the data and must adhere to data oblivious programming. These constraints originate, in part, because the secondary compartment may be untrusted and may be vulnerable or malicious. Adherence to data oblivious programming addresses the risk of sensitive data being exfiltrated through side channels within the secondary compartment.

Adapting only to a local-compute model poses new research challenges related to encapsulating data-oblivious execution for specific compartments. In a client-server implementation, the server may be prevented from using an operation to "declassify" sensitive information, so such there may be an absence of an instruction to declassify information in the instruction set architecture (ISA). However, in a local-compute model, the originating compartment may have access to a declassify instruction. Thus, there are new challenges related to restricting access to a declassify instruction.

The originating compartment is the owner of the sensitive data and can classify/declassify sensitive data at whim (e.g., declassifying some sensitive result to display it to a user). The compartment wishes to offload some computation to an untrusted library and ensure that this library does not look at or make decisions on the sensitive data. The originating compartment creates a key handle for the untrusted library. This key handle contains the originating compartment's data encryption key (or sensitive data encryption key) as well as permission bits indicating that the key cannot be used for classify/declassify operations. Thus, any data decrypted with this key handle must be flagged as sensitive within the register file. The remaining tag architecture and enforcement techniques described above aim to enforce that this library compartment adheres to data-oblivious execution of sensitive values.

Local computation requires classify and/or declassify instructions to enable the trusted program to operate on sensitive data. Declassify downgrades data marked as "Sensitive" to public. This operation should be used sparingly but is likely needed by a trusted application to do things like return results. It may be beneficial to harden this instruction against misuse in transient execution (e.g., via STT, a fence, or by making declassify a serializing operation) to avoid label checking being bypassed.

### Isolating Trusted and Untrusted Processes

The secondary (i.e., untrusted) compartment can be restricted from using declassify by providing it a special key handle that includes permissions restricting the use of classify/declassify instructions. Further, the secondary compartment can load sensitive data and request that it be decrypted with the corresponding key handle (*e.g.*, AESDEC256KL from the prior KeyLocker ISA decrypts the source operand into a register). This operation decrypts the data and flags the register as sensitive. The remaining data oblivious cryptographic computing architecture will enforce that this register value is handled data-obliviously. In cryptographic computing, data is implicitly decrypted/encrypted on the load/store path using a key installed. The key stored in the processor can be replaced by a *key handle* with the corresponding permissions. The architecture still implicitly decrypts/encrypts data on the load/store path, but the extra information provided by the key handle is used to encapsulate the untrusted compartment by restricting relevant operations such as declassify.

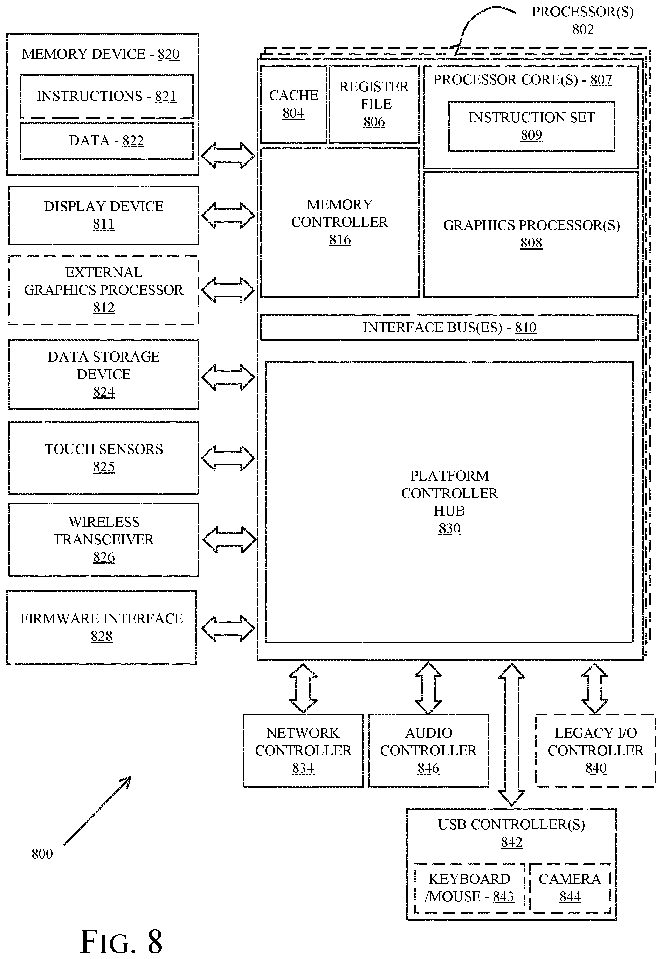

Fig. 8 illustrates an embodiment of an exemplary computing architecture that may be suitable for implementing various embodiments as previously described. In various embodiments, the computing architecture 800 may comprise or be implemented as part of an electronic device. In some embodiments, the computing architecture 800 may be representative, for example of a computer system that implements one or more components of the operating environments described above. In some embodiments, computing architecture 800 may be representative of one or more portions or components of a digital signature signing system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800.

As shown in Figure 8, the computing architecture 800 includes one or more processors 802 and one or more graphics processors 808, and may be a single processor desktop system, a multiprocessor workstation system, or a server system having a large number of processors 802 or processor cores 807. In on embodiment, the system 800 is a processing platform incorporated within a system-on-a-chip (SoC or SOC) integrated circuit for use in mobile, handheld, or embedded devices.

An embodiment of system 800 can include, or be incorporated within a server-based gaming platform, a game console, including a game and media console, a mobile gaming console, a handheld game console, or an online game console. In some embodiments system 800 is a mobile phone, smart phone, tablet computing device or mobile Internet device. Data processing system 800 can also include, couple with, or be integrated within a wearable device, such as a smart watch wearable device, smart eyewear device, augmented reality device, or virtual reality device. In some embodiments, data processing system 800 is a television or set top box device having one or more processors 802 and a graphical interface generated by one or more graphics processors 808.

In some embodiments, the one or more processors 802 each include one or more processor cores 807 to process instructions which, when executed, perform operations for system and user software. In some embodiments, each of the one or more processor cores 807 is configured to process a specific instruction set 809. In some embodiments, instruction set 809 may facilitate Complex Instruction Set Computing (CISC), Reduced Instruction Set Computing (RISC), or computing via a Very Long Instruction Word (VLIW). Multiple processor cores 807 may each process a different instruction set 809, which may include instructions to facilitate the emulation of other instruction sets. Processor core 807 may also include other processing devices, such a Digital Signal Processor (DSP).

In some embodiments, the processor 802 includes cache memory 804. Depending on the architecture, the processor 802 can have a single internal cache or multiple levels of internal cache. In some embodiments, the cache memory is shared among various components of the processor 802. In some embodiments, the processor 802 also uses an external cache (e.g., a Level-3 (L3) cache or Last Level Cache (LLC)) (not shown), which may be shared among processor cores 807 using known cache coherency techniques. A register file 806 is additionally included in processor 802 which may include different types of registers for storing different types of data (e.g., integer registers, floating point registers, status registers, and an instruction pointer register). Some registers may be general-purpose registers, while other registers may be specific to the design of the processor 802.

In some embodiments, one or more processor(s) 802 are coupled with one or more interface bus(es) 810 to transmit communication signals such as address, data, or control signals between processor 802 and other components in the system. The interface bus 810, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 802 include an integrated memory controller 816 and a platform controller hub 830. The memory controller 816 facilitates communication between a memory device and other components of the system 800, while the platform controller hub (PCH) 830 provides connections to I/O devices via a local I/O bus.

Memory device 820 can be a dynamic random-access memory (DRAM) device, a static random-access memory (SRAM) device, flash memory device, phase-change memory device, or some other memory device having suitable performance to serve as process memory. In one embodiment the memory device 820 can operate as system memory for the system 800, to store data 822 and instructions 821 for use when the one or more processors 802 executes an application or process. Memory controller hub 816 also couples with an optional external graphics processor 812, which may communicate with the one or more graphics processors 808 in processors 802 to perform graphics and media operations. In some embodiments a display device 811 can connect to the processor(s) 802. The display device 811 can be one or more of an internal display device, as in a mobile electronic device or a laptop device or an external display device attached via a display interface (e.g., DisplayPort, etc.). In one embodiment the display device 811 can be a head mounted display (HMD) such as a stereoscopic display device for use in virtual reality (VR) applications or augmented reality (AR) applications.

In some embodiments the platform controller hub 830 enables peripherals to connect to memory device 820 and processor 802 via a high-speed I/O bus. The I/O peripherals include, but are not limited to, an audio controller 846, a network controller 834, a firmware interface 828, a wireless transceiver 826, touch sensors 825, a data storage device 824 (e.g., hard disk drive, flash memory, etc.). The data storage device 824 can connect via a storage interface (e.g., SATA) or via a peripheral bus, such as a Peripheral Component Interconnect bus (e.g., PCI, PCI Express). The touch sensors 825 can include touch screen sensors, pressure sensors, or fingerprint sensors. The wireless transceiver 826 can be a Wi-Fi transceiver, a Bluetooth transceiver, or a mobile network transceiver such as a 3G, 4G, or Long Term Evolution (LTE) transceiver. The firmware interface 828 enables communication with system firmware, and can be, for example, a unified extensible firmware interface (UEFI). The network controller 834 can enable a network connection to a wired network. In some embodiments, a high-performance network controller (not shown) couples with the interface bus 810. The audio controller 846, in one embodiment, is a multi-channel high definition audio controller. In one embodiment the system 800 includes an optional legacy I/O controller 840 for coupling legacy (e.g., Personal System 2 (PS/2)) devices to the system. The platform controller hub 830 can also connect to one or more Universal Serial Bus (USB) controllers 842 connect input devices, such as keyboard and mouse 843 combinations, a camera 844, or other USB input devices.

The present invention is defined in the appended claims.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In addition "a set of" includes one or more elements. In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," etc. are used merely as labels, and are not intended to suggest a numerical order for their objects.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising:
a computer readable memory (140, 820); and
processing circuitry (110, 802) configured to:
identify (515) a sensitive heap allocation for a sensitive data object in memory;
encrypt the sensitive data object using a first encryption key, different from a second encryption key used to encrypt one or more non-sensitive data objects in the memory, to provide cryptographic isolation between the sensitive data object and the one or more non-sensitive data objects;
receive (520) a read access request for the sensitive data object, the read access request comprising a first pointer to the sensitive data object in the memory, the first pointer comprising a first tag that is set to a first value to indicate that the sensitive data object comprises sensitive data;
decrypt the sensitive data object retrieved from memory using the first encryption key;
re-encrypt (530) the sensitive data object using a third encryption key prior to storing the re-encrypted sensitive data object in a destination register; and
set (535) a second tag to indicate that the sensitive data object in the destination register comprises sensitive data.

2. The apparatus of claim 1, the processing circuitry (110, 802) further configured to:
receive (610) a request to perform an operation on the sensitive data in the destination register;
decrypt (635) the sensitive data object using the third encryption key prior to storing the decrypted sensitive data object in the destination register;
perform (640) the operation on the sensitive data object; and
re-encrypt (645) the sensitive data object using the third encryption key prior to storing the re-encrypted sensitive data object in the destination register.

3. The apparatus of any one of claims 1-2, the processing circuitry (110, 802) further configured to:
update a status register associated with the destination register to indicate that the sensitive data object in the destination register comprises sensitive data.

4. The apparatus of any one of claims 1-3, the processing circuitry (110, 802) further configured to:
receive (520) a write access request for the sensitive data object, the write access request comprising a second pointer to the destination register, the second pointer comprising a third tag that is set to a second value to indicate that the destination register comprises sensitive data; and
re-encrypt (525) the sensitive data object using the first encryption key prior to storing the re-encrypted sensitive data object in the memory.

5. The apparatus of any one of claims 1-4, the processing circuitry further configured to:
receive (520) a memory access request, the memory access request comprising a third pointer to a source register that comprises a status register which indicates that the source register comprises sensitive data; and
generate (630) a fault in response to a determination that an instruction which generated the memory access request does not secure ownership of the sensitive data.

6. The apparatus of claim 5, wherein the fault comprises a runtime error.

7. A computer-based method performed by a processing circuitry (110, 802), comprising:
identifying (515) a sensitive heap allocation for a sensitive data object in memory;
encrypting the sensitive data object using a first encryption key, different from a second encryption key used to encrypt one or more non-sensitive data objects in the memory, to provide cryptographic isolation between the sensitive data object and the one or more non-sensitive data objects;
receiving (520) a read access request for the sensitive data object, the read access request comprising a first pointer to the sensitive data object in the memory, the first pointer comprising a first tag that is set to a first value to indicate that the sensitive data object comprises sensitive data;
decrypting the sensitive data object retrieved from memory using the first encryption key;
re-encrypting (530) the sensitive data object using a third encryption key prior to storing the re-encrypted sensitive data object in a destination register; and
setting (535) a second tag to indicate that the sensitive data object in the destination register comprises sensitive data.

8. The method of claim 7, further comprising:
receiving (610) a request to perform an operation on the sensitive data in the destination register;
decrypting (635) the sensitive data object using the third encryption key prior to storing the decrypted sensitive data object in the destination register;
performing (640) the operation on the sensitive data object; and
re-encrypting (645) the sensitive data object using the third encryption key prior to storing the re-encrypted sensitive data object in the destination register.

9. The method of claim any one of claims 7-8, further comprising:
update a status register associated with the destination register to indicate that the sensitive data object in the destination register comprises sensitive data.

10. The method of any one of claims 7-9, further comprising:
receive (520) a write access request for the sensitive data object, the write access request comprising a second pointer to the destination register, the second pointer comprising a third tag that is set to asecond value to indicate that the destination register comprises sensitive data; and
re-encrypt (525) the sensitive data object using the first encryption key prior to storing the re-encrypted sensitive data object in the memory.

11. The method of any one of claims 7-10, further comprising:
receiving (520) a memory access request, the memory access request comprising a third pointer to a source register that comprises a status register which indicates that the source register comprises sensitive data; and
generating (630) a fault in response to a determination that an instruction which generated the memory access request does not secure ownership of the sensitive data.

12. The method of claim 11, wherein the fault comprises a runtime error.

## Patentansprüche

1. Vorrichtung, umfassend:
einen computerlesbaren Speicher (140, 820); und
Verarbeitungsschaltkreise (110, 802), ausgelegt zum Identifizieren (515) einer sensiblen Heap-Zuteilung für ein sensibles Datenobjekt im Speicher;
Verschlüsseln des sensiblen Datenobjekts unter Verwendung eines ersten Verschlüsselungsschlüssels, der von einem zweiten Verschlüsselungsschlüssel verschieden ist, der zum Verschlüsseln eines oder mehrerer nicht sensibler Datenobjekte in dem Speicher verwendet wird, um kryptografische Isolation zwischen dem sensiblen Datenobjekt und dem einen oder den mehreren nicht sensiblen Datenobjekten zu gewährleisten;
Empfangen (520) einer Lesezugriffsanforderung für das sensible Datenobjekt, wobei die Lesezugriffsanforderung einen ersten Zeiger auf das sensible Datenobjekt im Speicher umfasst, wobei der erste Zeiger ein erstes Tag umfasst, das auf einen ersten Wert gesetzt ist, um anzugeben, dass das sensible Datenobjekt sensible Daten umfasst;
Entschlüsseln des aus dem Speicher abgerufenen sensiblen Datenobjekts unter Verwendung des ersten Verschlüsselungsschlüssels;
Neuverschlüsseln (530) des sensiblen Datenobjekts unter Verwendung eines dritten Verschlüsselungsschlüssels vor dem Speichern des neu verschlüsselten sensiblen Datenobjekts in einem Zielregister; und
Setzen (535) eines zweiten Tags, um anzugeben, dass das sensible Datenobjekt in dem Zielregister sensible Daten umfasst.

2. Vorrichtung nach Anspruch 1, wobei die Verarbeitungsschaltkreise (110, 802) ferner ausgelegt sind zum
Empfangen (610) einer Anforderung, eine Operation an den sensiblen Daten in dem Zielregister auszuführen; Entschlüsseln (635) des sensiblen Datenobjekts unter Verwendung des dritten Verschlüsselungsschlüssels vor dem Speichern des entschlüsselten sensiblen Datenobjekts in dem Zielregister;
Ausführen (640) der Operation an dem sensiblen Datenobjekt; und
Neuverschlüsseln (645) des sensiblen Datenobjekts unter Verwendung des dritten Verschlüsselungsschlüssels vor dem Speichern des neu verschlüsselten sensiblen Datenobjekts in dem Zielregister.

3. Vorrichtung nach einem der Ansprüche 1-2, wobei die Verarbeitungsschaltkreise (110, 802) ferner ausgelegt sind zum
Aktualisieren eines dem Zielregister zugeordneten Statusregisters, um anzugeben, dass das sensible Datenobjekt in dem Zielregister sensible Daten umfasst.

4. Vorrichtung nach einem der Ansprüche 1-3, wobei die Verarbeitungsschaltkreise (110, 802) ferner ausgelegt sind zum
Empfangen (520) einer Schreibzugriffsanforderung für das sensible Datenobjekt, wobei die Schreibzugriffsanforderung einen zweiten Zeiger auf das Zielregister umfasst, wobei der zweite Zeiger ein drittes Tag umfasst, das auf einen zweiten Wert gesetzt ist, um anzugeben, dass das Zielregister sensible Daten umfasst; und
Neuverschlüsseln (525) des sensiblen Datenobjekts unter Verwendung des ersten Verschlüsselungsschlüssels vor dem Speichern des neu verschlüsselten sensiblen Datenobjekts in dem Speicher.

5. Vorrichtung nach einem der Ansprüche 1-4, wobei die Verarbeitungsschaltkreise ferner ausgelegt sind zum Empfangen (520) einer Speicherzugriffsanforderung, wobei die Speicherzugriffsanforderung einen dritten Zeiger auf ein Quellenregister umfasst, das ein Statusregister umfasst, das angibt, dass das Quellenregister sensible Daten umfasst; und
Erzeugen (630) eines Fehlers, wenn bestimmt wird, dass eine Anweisung, die die Speicherzugriffsanforderung erzeugt hat, die Eigentümerschaft der sensiblen Daten nicht sichert.

6. Vorrichtung nach Anspruch 5, wobei der Fehler einen Laufzeitfehler umfasst.

7. Computergestütztes Verfahren, das durch Verarbeitungsschaltkreise (110, 802) ausgeführt wird, umfassend:
Identifizieren (515) einer sensiblen Heap-Zuteilung für ein sensibles Datenobjekt im Speicher;
Verschlüsseln des sensiblen Datenobjekts unter Verwendung eines ersten Verschlüsselungsschlüssels, der von einem zweiten Verschlüsselungsschlüssel verschieden ist, der zum Verschlüsseln eines oder mehrerer nicht sensibler Datenobjekte in dem Speicher verwendet wird, um kryptografische Isolation zwischen dem sensiblen Datenobjekt und dem einen oder den mehreren nicht sensiblen Datenobjekten zu gewährleisten;
Empfangen (520) einer Lesezugriffsanforderung für das sensible Datenobjekt, wobei die Lesezugriffsanforderung einen ersten Zeiger auf das sensible Datenobjekt im Speicher umfasst, wobei der erste Zeiger ein erstes Tag umfasst, das auf einen ersten Wert gesetzt ist, um anzugeben, dass das sensible Datenobjekt sensible Daten umfasst;
Entschlüsseln des aus dem Speicher abgerufenen sensiblen Datenobjekts unter Verwendung des ersten Verschlüsselungsschlüssels;
Neuverschlüsseln (530) des sensiblen Datenobjekts unter Verwendung eines dritten Verschlüsselungsschlüssels vor dem Speichern des neu verschlüsselten sensiblen Datenobjekts in einem Zielregister; und
Setzen (535) eines zweiten Tags, um anzugeben, dass das sensible Datenobjekt in dem Zielregister sensible Daten umfasst.

8. Verfahren nach Anspruch 7, ferner umfassend:
Empfangen (610) einer Anforderung, eine Operation an den sensiblen Daten in dem Zielregister auszuführen;
Entschlüsseln (635) des sensiblen Datenobjekts unter Verwendung des dritten Verschlüsselungsschlüssels vor dem Speichern des entschlüsselten sensiblen Datenobjekts in dem Zielregister;
Ausführen (640) der Operation an dem sensiblen Datenobjekt; und
Neuverschlüsseln (645) des sensiblen Datenobjekts unter Verwendung des dritten Verschlüsselungsschlüssels vor dem Speichern des neu verschlüsselten sensiblen Datenobjekts in dem Zielregister.

9. Verfahren nach einem der Ansprüche 7-8, ferner umfassend:
Aktualisieren eines dem Zielregister zugeordneten Statusregisters, um anzugeben, dass das sensible Datenobjekt in dem Zielregister sensible Daten umfasst.

10. Verfahren nach einem der Ansprüche 7-9, ferner umfassend:
Empfangen (520) einer Schreibzugriffsanforderung für das sensible Datenobjekt, wobei die Schreibzugriffsanforderung einen zweiten Zeiger auf das Zielregister umfasst, wobei der zweite Zeiger ein drittes Tag umfasst, das auf einen zweiten Wert gesetzt ist, um anzugeben, dass das Zielregister sensible Daten umfasst; und
Neuverschlüsseln (525) des sensiblen Datenobjekts unter Verwendung des ersten Verschlüsselungsschlüssels vor dem Speichern des neu verschlüsselten sensiblen Datenobjekts in dem Speicher.

11. Verfahren nach einem der Ansprüche 7-10, ferner umfassend:
Empfangen (520) einer Speicherzugriffsanforderung, wobei die Speicherzugriffsanforderung einen dritten Zeiger auf ein Quellenregister umfasst, das ein Statusregister umfasst, das angibt, dass das Quellenregister sensible Daten umfasst; und
Erzeugen (630) eines Fehlers, wenn bestimmt wird, dass eine Anweisung, die die Speicherzugriffsanforderung erzeugt hat, die Eigentümerschaft der sensiblen Daten nicht sichert.

12. Verfahren nach Anspruch 11, wobei der Fehler einen Laufzeitfehler umfasst.

## Revendications

1. Appareil, comprenant :
une mémoire lisible par ordinateur (140, 820) ; et
une circuiterie de traitement (110, 802) configurée pour :
identifier (515) une allocation de tas sensible pour un objet de données sensibles en mémoire ;
crypter l'objet de données sensibles à l'aide d'une première clé de cryptage différente d'une deuxième clé de cryptage utilisée pour crypter un ou plusieurs objets de données non sensibles dans la mémoire, afin d'assurer une isolation cryptographique entre l'objet de données sensibles et le ou les objets de données non sensibles ;
recevoir (520) une demande d'accès en lecture pour l'objet de données sensibles, la demande d'accès en lecture comprenant un premier pointeur vers l'objet de données sensibles dans la mémoire, le premier pointeur comprenant une première étiquette mise à une première valeur pour indiquer que l'objet de données sensibles comprend des données sensibles ;
décrypter l'objet de données sensibles récupéré dans la mémoire à l'aide de la première clé de cryptage ;
crypter à nouveau (530) l'objet de données sensibles à l'aide d'une troisième clé de cryptage préalablement au stockage de l'objet de données sensibles crypté à nouveau dans un registre de destination ; et
définir (535) une deuxième étiquette pour indiquer que l'objet de données sensibles dans le registre de destination comprend des données sensibles.

2. Appareil selon la revendication 1, dans lequel la circuiterie de traitement (110, 802) est en outre configurée pour :
recevoir (610) une demande pour exécuter une opération sur les données sensibles dans le registre de destination ;
décrypter (635) l'objet de données sensibles à l'aide de la troisième clé de cryptage préalablement au stockage de l'objet de données sensibles décrypté dans le registre de destination ;
exécuter (640) l'opération sur l'objet de données sensibles ; et
crypter à nouveau (645) l'objet de données sensibles à l'aide de la troisième clé de cryptage préalablement au stockage de l'objet de données sensibles crypté à nouveau dans le registre de destination.

3. Appareil selon l'une quelconque des revendications 1 à 2, la circuiterie de traitement (110, 802) étant en outre configurée pour :
mettre à jour un registre d'état associé au registre de destination pour indiquer que l'objet de données sensibles dans le registre de destination comprend des données sensibles.

4. Appareil selon l'une quelconque des revendications 1 à 3, la circuiterie de traitement (110, 802) étant en outre configurée pour :
recevoir (520) une demande d'accès en écriture pour l'objet de données sensibles, la demande d'accès en écriture comprenant un deuxième pointeur vers le registre de destination, le deuxième pointeur comprenant une troisième étiquette qui est mise à une deuxième valeur pour indiquer que le registre de destination comprend des données sensibles ; et
crypter à nouveau (525) l'objet de données sensibles à l'aide de la première clé de cryptage préalablement au stockage de l'objet de données sensibles crypté à nouveau dans la mémoire.

5. Appareil selon l'une quelconque des revendications 1 à 4, la circuiterie de traitement étant en outre configurée pour :
recevoir (520) une demande d'accès à la mémoire, la demande d'accès à la mémoire comprenant un troisième pointeur vers un registre source qui comprend un registre d'état indiquant que le registre source comprend des données sensibles ; et
générer (630) une erreur en réponse à une détermination qu'une instruction qui a généré la demande d'accès à la mémoire ne sécurise pas la propriété des données sensibles.

6. Appareil selon la revendication 5, dans lequel l'erreur comprend une erreur d'exécution.

7. Procédé informatisé exécuté par une circuiterie de traitement (110, 802), comprenant les étapes suivantes :
identifier (515) une allocation de tas sensible pour un objet de données sensibles en mémoire ;
crypter l'objet de données sensibles à l'aide d'une première clé de cryptage différente d'une deuxième clé de cryptage utilisée pour crypter un ou plusieurs objets de données non sensibles dans la mémoire, afin d'assurer une isolation cryptographique entre l'objet de données sensibles et le ou les objets de données non sensibles ;
recevoir (520) une demande d'accès en lecture pour l'objet de données sensibles, la demande d'accès en lecture comprenant un premier pointeur vers l'objet de données sensibles dans la mémoire, le premier pointeur comprenant une première étiquette mise à une première valeur pour indiquer que l'objet de données sensibles comprend des données sensibles ;
décrypter l'objet de données sensibles récupéré dans la mémoire à l'aide de la première clé de cryptage ;
crypter à nouveau (530) l'objet de données sensibles à l'aide d'une troisième clé de cryptage préalablement au stockage de l'objet de données sensibles crypté à nouveau dans un registre de destination ; et
définir (535) une deuxième étiquette pour indiquer que l'objet de données sensibles dans le registre de destination comprend des données sensibles.

8. Procédé selon la revendication 7, comprenant en outre les étapes suivantes :
recevoir (610) une demande pour exécuter une opération sur les données sensibles dans le registre de destination ;
décrypter (635) l'objet de données sensibles à l'aide de la troisième clé de cryptage préalablement au stockage de l'objet de données sensibles décrypté dans le registre de destination ;
exécuter (640) l'opération sur l'objet de données sensibles ; et
crypter à nouveau (645) l'objet de données sensibles à l'aide de la troisième clé de cryptage préalablement au stockage de l'objet de données sensibles crypté à nouveau dans le registre de destination.

9. Procédé selon l'une quelconque des revendications 7 à 8, comprenant en outre les étapes suivantes :
mettre à jour un registre d'état associé au registre de destination pour indiquer que l'objet de données sensibles dans le registre de destination comprend des données sensibles.

10. Procédé selon l'une quelconque des revendications 7 à 9, comprenant en outre les étapes suivantes :
recevoir (520) une demande d'accès en écriture pour l'objet de données sensibles, la demande d'accès en écriture comprenant un deuxième pointeur vers le registre de destination, le deuxième pointeur comprenant une troisième étiquette qui est mise à une deuxième valeur pour indiquer que le registre de destination comprend des données sensibles ; et
crypter à nouveau (525) l'objet de données sensibles à l'aide de la première clé de cryptage préalablement au stockage de l'objet de données sensibles crypté à nouveau dans la mémoire.

11. Procédé selon l'une quelconque des revendications 7 à 10, comprenant en outre les étapes suivantes :
recevoir (520) une demande d'accès à la mémoire, la demande d'accès à la mémoire comprenant un troisième pointeur vers un registre source qui comprend un registre d'état indiquant que le registre source comprend des données sensibles ; et
générer (630) une erreur en réponse à une détermination qu'une instruction qui a généré la demande d'accès à la mémoire ne sécurise pas la propriété des données sensibles.

12. Procédé selon la revendication 11, dans lequel l'erreur comprend une erreur d'exécution.
